# EUROPEAN PATENT APPLICATION

(11) **EP 4 660 018 A1**
(43) Date of publication of application: **10.12.2025**
(21) Application number: 24180471.5
(22) Date of filing: 06.06.2024
(51) Int. Cl.: B60R 16/037

(54) **METHOD AND SYSTEM FOR CONFIGURING DRIVER PREFERENCES IN A VEHICLE**

(71) Applicant: Harman Becker Automotive Systems GmbH, 76307 Karlsbad (DE)
(72) Inventor: ALMEIDA, Gabriel, Marchesan, 76344 Eggenstein-Leopoldshafen (DE)
(74) Representative: Kraus & Lederer PartGmbB

(57) **Abstract**

A method (100) for configuring a property (142) of a vehicle (140) comprises communicating (304, 322) a signal (170) including a vehicle identifier from a head unit (150) of the vehicle (140) to a mobile device (120) assigned to a user (110) of the vehicle (140); determining (324, 402) at the mobile device (120) a setting as configured by the user (110) regarding a property (182) of another vehicle (180), the property (182) of the other vehicle (180) being of the same type as the property (142) of the vehicle (140); generating (326) a setting for the property (142) of the vehicle (140) based on the vehicle identifier and the determined setting; receiving (306) the generated setting at the vehicle (140); and configuring the property (142) of the vehicle (140) based on the received setting.

## Description

### Technical Field

The present application relates to the field of configuring driver preferences in a vehicle, in particular to methods, systems and devices that support configuration of a property of the vehicle, such as a property of a radio or climate control device, according to driver preferences.

### Background

Vehicles, especially premium vehicles, may offer a variety of functions and devices that enhance comfort and safety, e.g. a radio and entertainment system or electrically adjustable seats. These functions and devices can include, for example, radio settings like volume or preset channels, air conditioning settings, seat and mirror positions, driving mode settings, and navigation system settings. However, drivers must manually adjust these settings for each new vehicle. This takes time and is inconvenient for drivers who change vehicles frequently. In addition, the operation of similar or identical functions and devices may differ between vehicles from different manufacturers, making manual adjustment difficult and inconvenient.

### Summary

Therefore, there is a need in the art to support the configuration of driver preferences in a vehicle, particularly when the driver changes vehicles frequently and the vehicles are from different manufacturers.

This need is met by the methods and devices defined in the independent claims. The dependent claims define embodiments.

According to one aspect, a method is provided for configuring a property of a vehicle. The property may include, for example, a driver's seat, a steering wheel, a radio, an entertainment system, a drive train, a heating, ventilation and air conditioning (HVAC) system, or a rearview mirror of the vehicle. The method is performed by a system comprising a mobile device associated with a user of the vehicle and a head unit of the vehicle. The method comprises transmitting a signal including a vehicle identifier from the head unit to the mobile device. According to the method, a setting as configured by the user with respect to a property of another vehicle is determined at the mobile device. The property of the other vehicle is of the same type as the property of the vehicle. For example, the mobile device may determine a setting of a driver's seat position of the other vehicle as configured by the user when the user used the other vehicle. The method further comprises generating a setting for the property of the vehicle at the mobile device based on the vehicle identifier and the determined setting. In the above example, the mobile device may generate a corresponding setting for the position for the driver's seat of the vehicle taking into account specifics of the vehicle based on the vehicle identifier. The generated setting is received at the vehicle, and the property of the vehicle is configured based on the received setting.

In the present disclosure, the term "property" encompasses both devices and functions. For example, one property may relate to the driver's seat. A setting of this property may be the position in the rear/front direction of the vehicle or an inclination of the seat or backrest. Another property may relate to a navigation function. A setting of this property may include preferred road types, a map display and the voice used to provide navigation instructions.

According to various examples, generating the setting comprises adapting the determined setting based on configuration characteristics of the property of the vehicle and configuration characteristics of the property of the other vehicle. For example, seat and rearview mirror settings may be adapted accordingly even if the vehicle and the other vehicle have significantly different dimensions and geometries.

Communication of the signal including the vehicle identifier from the head unit to the mobile device may be accomplished, for example, by providing an optical code on a display of the vehicle, such as a QR code. The optical code may contain the vehicle identifier. The mobile device may scan the optical code with a camera of the mobile device. According to further examples, a near-field radio signal (e.g., RFID) including the vehicle identifier may be emitted at the vehicle, e.g., by a transmitter of the head unit. The mobile device may receive the near-field radio signal.

In various examples, the setting as configured by the user with respect to the property of the other vehicle is determined by retrieving that setting from a data service. User identification and/or user authentication for retrieving the setting is provided by the mobile device to the data service.

The data service may be provided by the mobile device or by a service provider in communication with at least one of the mobile device and the vehicle. Providing the data service by the mobile device enables configuration of the property of the vehicle without involving any other entity, i.e. no data communication with a server or cloud service is required, such that the configuration can be performed without additional costs for data communication and in areas where wireless communication is not available. All of the information needed to configure the vehicle's properties can be provided by the mobile device, for example, stored in an application on a cellular smart phone. Providing the data service through a service provider, such as a cloud service in a wireless communication infrastructure, enables reliable storage and usability in connection with different mobile devices of the user. Data privacy and confidentiality can be ensured by access mechanisms including user identification and user authentication.

A current setting of the property of the vehicle may be communicated to the data service. The current setting of the property of the vehicle may be communicated at regular intervals, for example every few minutes or every few seconds, or may be communicated when the setting is changed by the user. Preferably, the current setting of the property of the vehicle is stored in the data service in association with the vehicle identifier and the user identifier. In this way, up-to-date information on the setting of the vehicle's property can be achieved in the data service.

The signal including the vehicle identifier can be transmitted when the user enters the vehicle. For example, upon opening the driver's door or upon detecting a person sitting in the driver's seat, the signal may be communicated, e.g., the QR code may be displayed on the head unit. In further examples, the signal including the vehicle identifier may be communicated when the user registers with the vehicle, e.g., enters his or her name on the head unit and/or registers by programming his or her fingerprint, e.g., on the start button of the vehicle, or scans his or her face for subsequent face identification. In some examples, the signal including the vehicle identifier may be transmitted when the user is identified as not being registered at the vehicle. For example, a camera of the vehicle may scan the user's face. If the user is already registered, the user can be identified and the user preferences can be automatically retrieved from the data service or memory of the head unit. If the user's face cannot be identified, the signal including the vehicle identifier is transmitted so that the user's mobile device can determine and generate the user preferences for configuring the property(properties) of the vehicle.

Further aspects relate to a method for a head unit of a vehicle. According to the method, a signal including a vehicle identifier is transmitted to a mobile device assigned to a user of the vehicle. Further according to the method, the head unit receives a setting for a property of the vehicle. The setting is generated based on the vehicle identifier and a setting configured by the user with respect to a property of another vehicle, wherein the property of the other vehicle is of the same type as the property of the vehicle. The property is configured based on the received setting.

For example, to transmit the signal including the vehicle identifier, the head unit may provide an optical code including the vehicle identifier, such as a QR code, on a display of the vehicle, e.g. a display of the head unit. In other examples, a near-field radio signal including the vehicle identifier may be emitted from the head unit.

The signal including the vehicle identifier may be transmitted when the user enters the vehicle, when the user registers with the vehicle, and/or when the user is identified as not registered with the vehicle.

The method may further comprise transmitting a current setting of the property of the vehicle to a data service, for example when the user changes a setting of the property.

A further aspect relates to a method performed by a mobile device associated with a user of a vehicle. The method comprises receiving a signal including a vehicle identifier from the vehicle and causing a data service to determine a setting as configured by the user with respect to a property of another vehicle. The property of the other vehicle is of the same type as the property of the vehicle. According to the method, the mobile device further causes the data service to generate a setting for the property of the vehicle based on the vehicle identifier and the determined setting, and to transmit the generated setting to the vehicle for the vehicle to configure the property of the vehicle based on the transmitted setting.

According to various examples, the data service is provided by the mobile device, i.e. the above method steps are performed by a processing unit of the mobile device with information provided by the mobile device, for example in a memory of the mobile device. In some examples, the data service is provided by a service provider in communication with the mobile device and/or the vehicle. The service provider may be a cloud service in communication with the mobile device and/or the vehicle via a wireless communication. Information about user preferences in other vehicles may be stored in the cloud service, and the method steps described above may be at least partially performed by a server in the cloud. Thus, data storage in the mobile device may be reduced to a minimum and the service may be available with any mobile device. In general, the mobile device may comprise a mobile phone, in particular a smart phone.

In various examples, receiving the signal includes scanning an optical code with a camera of the mobile device. The optical code, such as a QR code, includes the vehicle identifier. In further examples, the signal is received as a near-field radio signal including the vehicle identifier.

Some aspects relate to a method at a data service. In response to a request from a mobile device associated with a user of a vehicle, a setting as configured by the user is determined with respect to a property of another vehicle. The property of the other vehicle is of the same type as a property of the vehicle. The method further comprises generating a setting for the property of the vehicle based on a vehicle identifier provided by the mobile device and the determined setting, and transmitting the generated setting to the vehicle.

The data service may be provided by the mobile device or a service provider in communication with at least one of the mobile device and the vehicle, such as a cloud service.

For example, to generate the setting, the determined setting may be adapted based on configuration characteristics of the property of the vehicle and configuration characteristics of the property of the other vehicle. For example, with respect to configuration characteristics of a driver's seat, a driver's seat of the other vehicle may be configurable in 20 available positions, while a driver's seat of the present vehicle may be configurable in 10 available positions. If a user in the other vehicle prefers position 8, the preferred position for the present vehicle and can be determined to be 4. Geometries of the vehicle and the other vehicle may also be considered.

User identification and/or user authentication for determining the setting configured by the user with respect to the property of the other vehicle can be provided by the mobile device or the service provider (i.e., a cloud server). The mobile device may be a personal mobile device, such as a mobile phone, in particular a smart phone, specifically associated with the user. In this way, identification and/or authentication information can be made readily available through the use of the mobile device.

The method may further comprise receiving a current setting of the property of the vehicle. The received current setting of the property of the vehicle may be stored in the data service in association with the vehicle identifier and the user identification. Thus, current information regarding the user's preferences for the property of the vehicle is available when the user changes to another vehicle supporting the above described methods for configuring a corresponding property in the other vehicle.

Generally, the vehicle identifier may include a vehicle make, a vehicle model, a vehicle identification number, and/or a communication address for establishing wireless data communication with the vehicle. Thus, configuration characteristics of the property can be easily retrieved.

For example, the property may may include a driver's seat, a steering wheel, a radio, an entertainment system, a drivetrain, a heating, ventilation and air conditioning system, and/or a rearview mirror. Typically, a user configures these properties individually according to personal needs and preferences. However, the above methods are not limited to the above properties and can be applied to other properties in the vehicle.

A further aspect relates to a system comprising a mobile device associated with a user of a vehicle, a head unit of the vehicle, and a vehicle property to be configured. The system is configured to communicate a signal including a vehicle identifier from the head unit to the mobile device and to determine at the mobile device a setting as configured by the user with respect to a property of another vehicle. The property of the other vehicle is of the same type as the property of the vehicle. The system is further configured to generate, at the mobile device, a setting for the property of the vehicle based on the vehicle identifier and the determined setting, to receive, at the vehicle, the generated setting, and to configure the property of the vehicle based on the received setting.

A head unit of a vehicle comprises control circuitry configured to transmit a signal including a vehicle identifier to a mobile device. The head unit, also known as an automotive head unit, may be a vehicle component that provides an interface for an infotainment system and a vehicle system, including screens, buttons, and system controls for numerous integrated information, entertainment, and configuration functions. The mobile device, such as a mobile phone, is associated with a user of the vehicle. The head unit is further configured to receive a setting for a property of the vehicle. The setting is generated based on the vehicle identifier and a setting configured by the user with respect to a property of another vehicle. The property of the other vehicle is of the same type as the property of the vehicle. The head unit configures the property based on the received setting.

A mobile device associated with a user of a vehicle comprises control circuitry. The mobile device may be a personalized mobile device, for example a mobile phone, in particular a smart phone. The control circuitry is configured to receive a signal including a vehicle identifier from the vehicle and to cause a data service to determine a setting as configured by the user with respect to a property of another vehicle. The property of the other vehicle is of the same type as the property of the vehicle. The control circuitry is further configured to cause the data service to generate a setting for the property of the vehicle based on the vehicle identifier and the determined setting, and to transmit the generated setting to the vehicle so that the vehicle can configure the property of the vehicle based on the transmitted setting.

A data service comprises control circuitry. The data service may be included in a mobile device, such as a mobile phone, or may be included in a server, such as a server coupled to a data communication network, such as a cloud server. The control circuitry is configured to determine, upon a request from the mobile device associated with a user of a vehicle, a setting as configured by the user with respect to a property of another vehicle. The property of the other vehicle is of the same type as the property of the vehicle. For example, the property type is "driver's seat" and the setting relates to a position of the driver's seat. The control circuitry is further configured to generate a setting for the property of the vehicle based on a vehicle identifier provided by the mobile device and the determined setting, and to transmit the generated setting to the vehicle.

It should be understood that the above summary is provided to introduce in simplified form a selection of concepts that are further described in the detailed description. It is not intended to identify key or essential features of the claimed subject matter, the scope of which is uniquely defined by the claims that follow the detailed description. Further, the claimed subject matter is not limited to implementations that solve any of the disadvantages noted above or in any part of this disclosure.

### Brief description of the Drawings

The above and other aspects and embodiments, advantageous modifications, further improvements, elements, features, steps and characteristics of the present disclosure will become more apparent from the following detailed description of exemplary embodiments and the accompanying figures. Unless otherwise indicated or the context otherwise requires, like reference signs refer to corresponding elements or features of the exemplary embodiments and throughout the figures.
Fig. 1 schematically illustrates a system according to an embodiment.
Fig. 2 schematically illustrates a system according to a further embodiment.
Fig. 3 is a flowchart of a method for configuring a property of a vehicle according to an embodiment.
Fig. 4 is a flowchart of a method for configuring a property of a vehicle according to a further embodiment.
Fig. 5 is a flowchart of a method for configuring a property of a vehicle according to a further embodiment.

### Detailed description

Various embodiments of the invention are described in detail below with reference to the accompanying figures. It is to be understood that the following description of embodiments is not to be understood in a limiting sense. The scope of the invention is not intended to be limited by the embodiments described below or by the figures, which are intended to be illustrative only.

The figures are to be regarded as schematic representations and the elements shown in the figures are not necessarily shown to scale. Rather, the various elements are shown such that their function and general purpose will be apparent to a person skilled in the art. Any connection or coupling between functional blocks, devices, components or other physical or functional units shown in the figures or described herein may also be implemented by indirect connection or coupling. Coupling between components may be accomplished via a wireless connection. Functional blocks may be implemented in hardware, firmware, software, or a combination thereof.

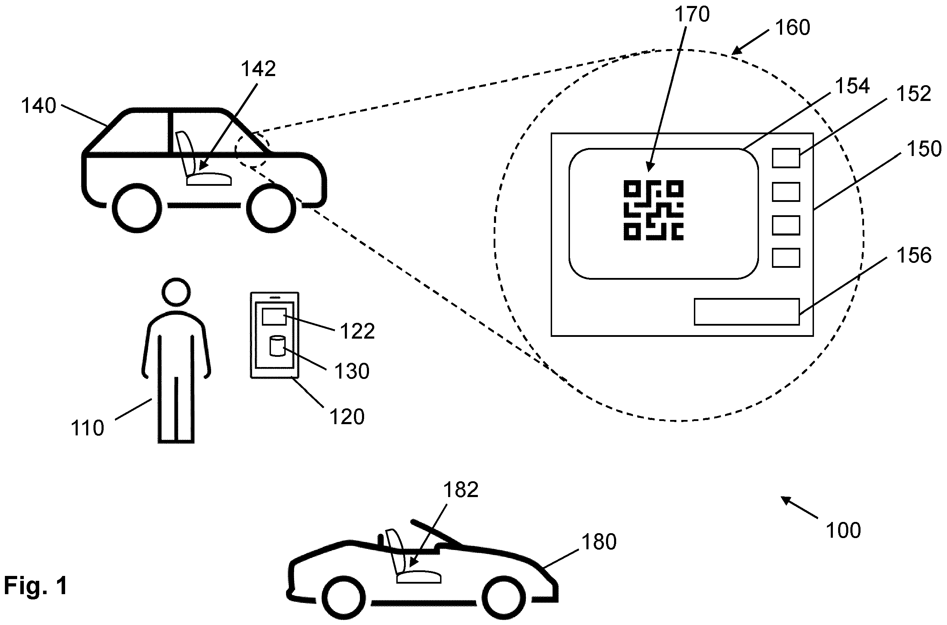

Fig. 1 schematically illustrates a system 100 adapted to configure a property of a vehicle according to an embodiment.

In an exemplary embodiment, the system 100 comprises a mobile device 120 of a user 110, a head unit 150 of a vehicle 140, and a property 142 of the vehicle 140.

The head unit 150, sometimes referred to as an automotive head unit, is a vehicle component that provides a hardware interface for multiple systems of the vehicle 140, such as an audio and entertainment system, and a control system of the vehicle 140, such as a CAN bus system. The head unit 150 may comprise a user interface, which is shown in an enlarged view 160 in Fig. 1. The user interface may comprise a screen 154, buttons 152 and (not shown) system controls for numerous information, control and entertainment functions. The head unit 150 may comprise control circuitry 156 including, for example, a processor (CPU), memory and interfaces. Control instructions (software) may be stored in the memory and may cause the processor to perform the functions and methods described herein.

As used herein, "control circuitry" may include a data processor, such as a microprocessor, or any other means adapted to process data, particularly digital data.

The head unit 150, or at least the user interface, may be prominently located in the center of a dashboard or console of the vehicle 140.

The head unit 150 may provide a user interface for the vehicle's information, control, and entertainment media components, herein referred to as properties 142 of the vehicle 140.

Here, the term "property" encompasses both devices and functions. For example, one property may relate to the driver's seat. A setting of this property may be the position in the rear/front direction of the vehicle or an inclination of the seat or backrest. Another property may relate to a navigation function. A setting of this property may include preferred road types, a map display and the voice used to provide navigation instructions.

The properties 142 may include, for example: AM/FM radio, satellite radio, DVDs/CDs, cassette tapes (although these are now uncommon), USB MP3 player, dash cam, GPS navigation, Bluetooth interface, Wi-Fi, vehicle seats, steering wheel, drivetrain, heating, ventilation and air conditioning system, and rearview mirrors. For example, the head unit 150 may provide control of audio functions including volume, band, frequency, speaker balance, speaker fade, bass, treble, equalization, and the like. The head unit 150 may integrate voice control and gesture recognition. The head unit 150 may provide configuration of a drivetrain mode, such as economy, sport, or comfort. A position of a driver's seat and an inclination of the seat back may be configured. Interior and exterior rearview mirrors may be adjusted by the head unit 150. Thus, the head unit 150 may be configured to control a plurality of controllable properties 142 of the vehicle. The controllable properties 142 may include actuators, such as electric, hydraulic, or pneumatic actuators, to be controllable by control signals from the head unit 150. In the following, the driver's seat is primarily referred to as an example of the controllable properties 142 of the vehicle 140. However, it is understood that the same methods and techniques can be applied to the other controllable properties listed above and to other controllable properties that can be coupled to the head unit 150 and that can be configured under control of the head unit 150, such as a headrest or interior lighting of the vehicle 140.

The mobile device 120 may be a device associated with the user 110. The mobile device 120 may be personalized, that is, the user 110 is registered with the mobile device, and user information, such as the user's name and other information for uniquely identifying the user, may be stored in the mobile device 120. For example, the mobile device 120 may be a mobile or cellular phone, particularly a smart phone. The mobile device may comprise control circuitry 122 including, for example, a processor (CPU), memory, and interfaces. Control instructions (software) may be stored in the memory and may cause the processor to perform the functions and methods described herein.

The user 110 may use different vehicles, such as the vehicle 140 and the vehicle 180. The user 110 may use more than the two vehicles 140 and 180. The user 110 may use vehicles from a corporate fleet or from a rental car company. The user may use one of these different vehicles only once or a plurality of times. The vehicles may include different models of the same or different brands. However, most or all of the vehicles may include the properties described above. For example, as shown in Fig. 1, the vehicle 180 is of a different make than the vehicle 140. However, both vehicles 140 and 180 have the controllable driver's seats 142, 182.

The techniques implemented by the system 100 are essentially configured to transfer a user-specific configuration (e.g., seat, climate, mirror, radio settings, etc.) as used in one vehicle (e.g., vehicle 180) to another vehicle (e.g., vehicle 140), e.g., when renting a car or changing vehicles. These techniques work with all vehicles having the head unit 150 as described herein. In summary, the head unit 150 of the vehicle 140 that the user currently wishes to use communicates a signal containing a vehicle identifier, e.g., by presenting a QR code 170 on the display 154, which is received (scanned) by the mobile device 120. An application on the mobile device 120 determines a setting of a corresponding user-specific configuration in another vehicle, e.g., a position of the driver's seat 182 in the vehicle 180, and generates a configuration for the current vehicle 140 to be used, i.e., the driver's seat 142 of the vehicle 140. The mobile device 120 may determine the corresponding configuration in the other vehicle 180 from values of a data service 130 provided in the mobile device 120, for example as part of the application. Based on the information from the data service 130, the mobile device 120 may convert the configuration and then transmit the configuration to the vehicle 140. Corresponding configurations, such as driver's seat configurations, may have previously been stored in the data service 130 when the user was using the other vehicle, such as the vehicle 180.

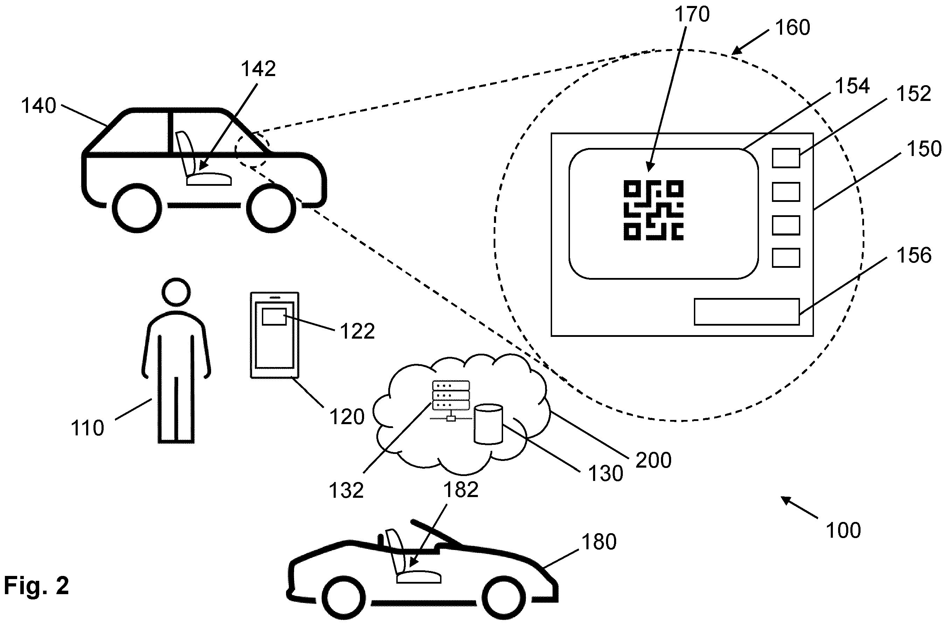

Additionally or alternatively, as illustrated in Fig. 2, the data service 130 may be provided in a data communication network 200, for example by a service provider 132 located in or accessible through the data communication network 200. The data communication network 200 may comprise a wireless and/or wired data communication network, including, for example, the Internet, local area networks, wireless area networks, and/or telecommunication networks that support wireless data communication, such as GSM, LTE, or 5G. The data service 130 is provided in the data communication network 200 and may comprise control circuitry configured to perform at least some of the techniques described above in a manner similar to that implemented by the mobile device 120.

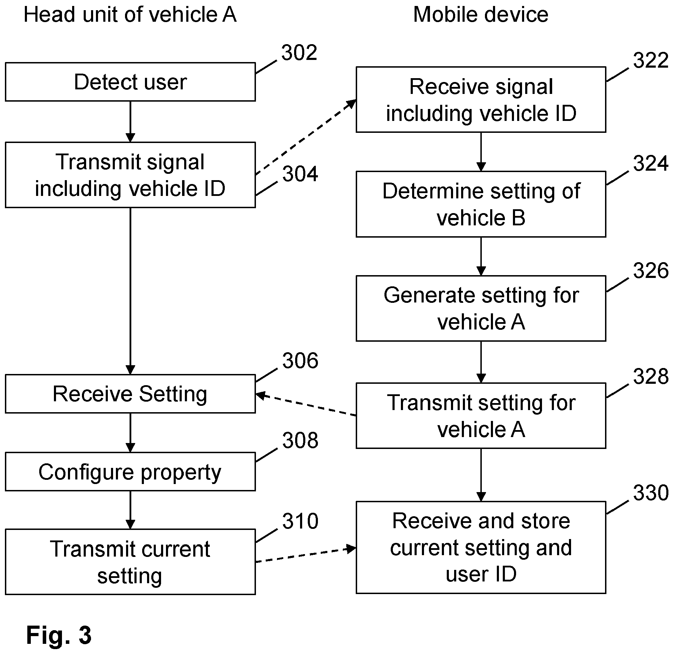

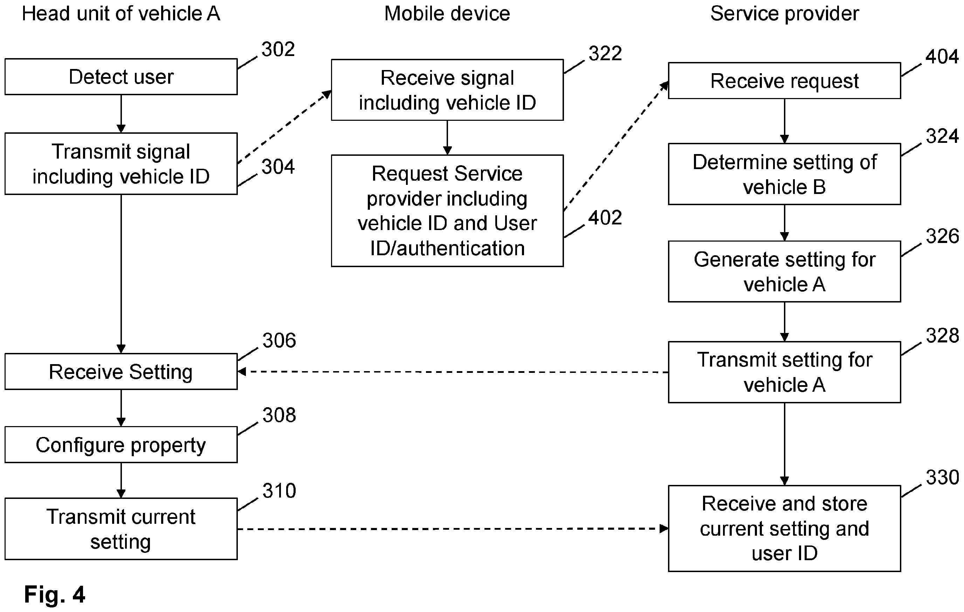

The operation of the System 100 as shown in Fig. 1 and Fig. 2, respectively, is described below in conjunction with Fig. 3 and Fig. 4, respectively.

Fig. 3 refers to the scenario illustrated in Fig. 1 and shows method steps 302-310 performed by the head unit 150 of the vehicle 140 and method steps 322-330 performed by the mobile device 120. The user 110 may wish to use the vehicle 140. The user 110 may be using the vehicle 140 for the first time. The vehicle 140 may be a rental car, a car from a company fleet, or a car that the user has just purchased. In the past, the user 110 may have used the vehicle 180 and may have adjusted personal preferences in the vehicle 180, such as a position of the seat 182, a configuration of a radio and entertainment system of the vehicle 180, and the like. The vehicle 180 may be equipped with a head unit that can retrieve settings of the properties of the vehicle 180, particularly the position of the seat 182. When this user has used the vehicle 180 in the past, the mobile device 120 may have been coupled to the head unit of the vehicle 180 and may have received the configuration of the properties of the vehicle 180, in particular a position of the driver's seat 182. The mobile device 120 may have stored this information in the data service 130. The information may have been stored in an encrypted form.

Now, when the user enters the vehicle 140, the head unit 150 of the vehicle 140 may detect the user 110 in step 302. For example, the head unit 150 may determine that the door of the vehicle 140 has been opened or that the user 110 has taken a seat in the driver's seat 142.

In response to detecting the user 110, the head unit 150 transmits a signal in step 304 indicating that the head unit 150 can configure the properties of the vehicle 140 according to user preferences, if desired. The signal includes a vehicle identifier, such that the user preferences can be tailored to the specific properties provided in the vehicle 140. For example, the signal may be a QR code 170 displayed on the display 154 of the head unit 150. In other examples, the signal may be an RFID signal. In either case, the signal may be received by the mobile device 120 in step 322, for example, by using a camera of the mobile device 120 to scan the QR code 170 or by using a transceiver of the mobile device 120 to receive the RFID signal. Other types of signals may be used, such as infrared signals or other radio frequency signals, such as Bluetooth.

In step 324, the mobile device 120 may determine settings of properties of another vehicle that the user 110 has previously used, such as settings of properties of the vehicle 180. For example, the mobile device 120 may determine the setting of the position of the driver's seat 182 from the data service 130. The vehicle 180 may provide 20 different positions for the driver's seat 182, while the vehicle 140 only provides 10 positions for the driver's seat 142. Therefore, in step 326, the mobile device 120 may generate a setting for the properties of the vehicle 140. For the driver's seat example above, the mobile device 120 may calculate a position for the driver's seat 142 based on the positioning ranges provided for the driver's seats 142, 182 in the vehicles 140, 180 and the position of the driver's seat 182 as most recently used by the user 110. For example, in the vehicle 180, the driver's seat 182 may be positioned at position 14, and the mobile device 120 may calculate a setting for the driver's seat 142 at position 7 based thereon. Corresponding settings for other properties of the vehicle 140 may be determined by the mobile device 120 based on the settings for corresponding properties in the vehicle 180 stored in the data service 130. For example, a volume of the radio, a position of the rearview mirrors, and a configuration of a driving mode may be generated accordingly.

In step 328, the mobile device 120 communicates the generated settings to the vehicle 140. For example, the settings may be transmitted via a radio frequency transmission, such as Bluetooth or a wireless local area network (WLAN). In step 306, the head unit 150 of the vehicle 140 receives the settings and in step 308 configures the respective properties according to the received settings.

Now, when the user 110 begins to use the vehicle 140, at least some of the properties of the vehicle 140 are configured according to the preferences of the user 110. For example, the position of the driver's seat 142, a position of the backrest of the driver's seat 142, channels and audio settings of a radio and entertainment system, rearview mirror settings, and settings of a heating, ventilation, and air conditioning system may be configured according to the user's preferences.

While the user 110 is using the vehicle 140, some of the preferences may change. For example, the channel setting of the radio system or an inclination of the backrest of the driver's seat 142 may be changed by the user while using the vehicle 140. Upon such changes, the head unit 150 may transmit a current setting of the properties of the vehicle 140 to the mobile device 120 in step 310. The mobile device 120 receives these changed settings and stores them in the data service 130 in step 330.

The next time the user 110 enters the vehicle 140, the head unit 150 may determine that the user 110 has previously used the vehicle 140. For example, the head unit 150 may have a camera and identify the user 110 using face identification techniques. In other examples, the user may be identified by RFID communication between the mobile device 120 of the user 110 and the vehicle 140, such that the user is indirectly identified through the mobile device 120 associated with the user. In other examples, the user may be identified by a fingerprint sensor in the door handle or start/stop button of the vehicle 140. If the head unit 150 determines that the user 110 has previously used the vehicle 140, the head unit 150 may retrieve the user preferences from its own memory, for example, if the user preferences have been stored in the control circuitry 156. In this case, the head unit 150 may not perform steps 304 and 306 and may configure the properties in step 308 based on the preferences retrieved from its own memory. However, even in this case, steps 304 and 306 may be performed to obtain current preferences, for example, if the user has updated the user's preferences when using a different vehicle.

Fig. 4 refers to the scenario illustrated in Fig. 2. Fig. 2 differs from Fig. 1 only in that the data service 130 is not hosted on the mobile device 120, but is hosted by the service provider 132, e.g., a server in the data communication network 200, e.g., as a cloud service. However, the essential techniques described above are the same, except that several steps discussed above are now performed by the service provider 132.

Fig. 4 illustrates method steps 302-310 performed by the head unit 150 of the vehicle 140, method steps 322 and 402 performed by the mobile device 120, and method steps 404 and 324-330 performed by the service provider 132. As discussed above, the user 110 may wish to use the vehicle 140 for the first time. In the past, the user 110 may have used the vehicle 180 and configured the properties of the vehicle 180 according to personal preferences. These configurations may have been stored in the data service 130. For example, the configurations may have been uploaded to the service provider 132 via the mobile device 120, and the service provider 132 may have stored the configurations in the data service 130. In some examples, the configurations may have been uploaded to the service provider 132 directly from the head unit of the vehicle 182.

Wireless communications may be established, for example, between the mobile device 120 and the service provider 132 and/or between the vehicles 140, 180 and the service provider 132. The mobile device 120 and/or the vehicles 140, 180 may each include a wireless communication interface, such as a 5G modem with antenna, and may be adapted to communicate, e.g., send and receive data, with the service provider 132 directly or via a wireless infrastructure, such as a 5G network and/or via the Internet 42.

When the user enters the vehicle 140, the head unit 150 of the vehicle 140 may detect the user 110 in step 302. For example, the head unit 150 may determine that the door of the vehicle 140 has been opened or that the user 110 has taken a seat in the driver's seat 142.

After detecting the user 110, the head unit 150 transmits a signal indicating that the head unit 150 is capable of configuring the properties of the vehicle 140 according to the user preferences in step 304. The signal includes a vehicle identifier, such that the user preferences can be customized to the specific properties provided in the vehicle 140. For example, the signal may be a QR code 170 displayed on the display 154 of the head unit 150. In other examples, the signal may be an RFID signal. In either case, the signal may be received by the mobile device 120 in step 322, for example, by using a camera of the mobile device 120 to scan the QR code 170 or by using a transceiver of the mobile device 120 to receive the RFID signal.

In step 402, the mobile device 120 may cause the service provider 132 to provide configuration data to the vehicle 140. Specifically, the mobile device 120 may transmit a request to the service provider 132 that includes the vehicle identifier and a user identifier and user authentication information. Based on the user identifier and the user authentication information, the service provider 132 may, in step 324, determine settings of properties of another vehicle that the user 110 has previously used, such as settings of properties of the vehicle 180. The user authentication information may be optional, but the user authentication information may be included as mandatory information for privacy and security reasons. The user identification may also be optional, and the user may be indirectly identified by an identifier of the mobile device 120.

For example, the service provider 132 may determine the setting of the position of the driver's seat 182 as previously configured by the user 110 from the data service 130. As described above, in step 326, the service provider 132 may generate a setting for the properties of the vehicle 140. In particular, the service provider 132 may determine corresponding settings for some or all of the configurable properties of the vehicle 140 based on the settings for corresponding properties in the vehicle 180 as stored in the data service 130. The settings for the corresponding properties in the vehicle 180 may be stored in the data service 130 in an encrypted form.

In step 328, the service provider 132 may communicate the generated settings to the vehicle 140. For example, the settings may be transmitted over a wireless communications network, such as a cellular network. In step 306, the head unit 150 of the vehicle 140 receives the settings and configures the respective properties in step 308 according to the received settings.

Thus, when the user 110 enters the vehicle 140, at least some of the properties of the vehicle 140 are automatically configured according to the preferences of the user 110. For example, the position of the driver's seat 142, a position of the backrest of the driver's seat 142, channels and audio settings of a radio and entertainment system, rearview mirror settings, and settings of a heating, ventilation, and air conditioning system may be configured according to the user's preferences.

While the user 110 is using the vehicle 140, some of the preferences may change. Upon such changes, the head unit 150 may, in step 310, transmit a current setting of the properties of the vehicle 140 to the service provider 132, for example, via a wireless communication network. The service provider 132 receives these changed settings in step 330 and stores them in the data service 130. The settings may be stored in an encrypted form.

In summary, users or drivers can now easily save and restore their preferred car settings using the techniques described above. This can include saving paired Bluetooth devices, car seat positions, HVAC preferences, mirror settings, and favourite radio stations. Instead of having to manually set each of these preferences each time they drive a new car, drivers can now easily and automatically back up their data from their current car using their mobile phone and restore it in any other car they drive. This ensures a consistent driving experience across different cars, saving time and effort.

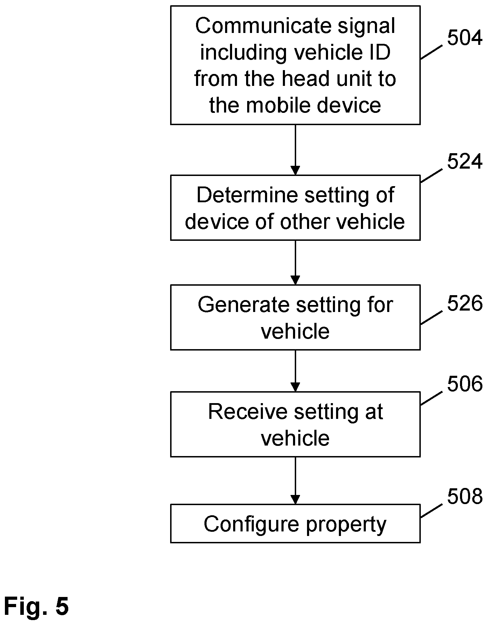

FIG. 5 illustrates a flowchart summarizing the method steps performed by the system 100 to configure the property 142, e.g., the driver's seat 142, of the vehicle 140. In step 504, the signal 170 including the vehicle identifier is communicated from the head unit 150 to the mobile device 120. In step 524, a setting as configured by the user 110 with respect to the property 182 of the other vehicle 180 is determined at the mobile device 120, or the mobile device 120 causes the setting to be determined, e.g., at the service provider 132. The property 182 of the other vehicle 180 is of the same type as the property 142 of the vehicle 140. A setting for the property 142 of the vehicle 140 is generated based on the vehicle identifier and the determined setting in step 526. In step 506, the generated setting is received at the vehicle 140, e.g., from the mobile device 120 or the service provider 132, and the property 142 of the vehicle 140 is configured based on the received setting in step 508, e.g., by the head unit 150.

The techniques described above may be implemented by a software application in the head unit 150 of each vehicle, e.g., vehicles 140 and 180. The techniques may be enabled or disabled by the user through the user interface provided by the head unit 150. Once enabled, the software application may continuously monitor changes in user preferences, such as newly paired Bluetooth devices, changes in seat position, HVAC preferences, mirror adjustments, or adding/removing favourite radio stations. This information is encrypted and stored locally in the head unit. Drivers can back up their preferences using a smartphone software application, such as by scanning a QR code in the head unit. Once authenticated, drivers can synchronize their in-car preferences via their mobile phone, e.g. automatically save the preferences to the mobile phone or to a cloud service.

When drivers rent a new car equipped with the software application in the head unit, they can scan the QR code with their smartphone, and all their preferences will be restored, adjusting the new vehicle accordingly. The techniques can use advanced algorithms to map different car models of different brands to user preferences, so the system will change to the closest possible value even if the driver selects a different car model or brand. The software in the mobile phone or the service provider may be equipped with car model and brand specific information so that this information is known and can be used to easily convert the settings.

The above techniques, which allow drivers to easily save and restore their preferred car settings using their mobile phones, provide several benefits. First, it ensures a consistent driving experience for drivers across vehicles, saving them time and effort. With the ability to save paired Bluetooth devices, car seat positions, HVAC preferences, mirror settings, and radio station preferences, drivers no longer have to manually set them each time they drive a new car. This feature also eliminates the inconvenience of adjusting to new car settings, creating a seamless driving experience for drivers.

Second, the head unit constantly monitors user preferences, making it easier for drivers to keep track of their preferences and make changes as needed. The application software can be preinstalled in the head unit of a wide variety of vehicles of different models and brands, and can be enabled or disabled by the user through the user interface, ensuring that drivers have control over their preferences. Preference information can be encrypted by the head unit or mobile phone and stored in a file system of the head unit, mobile phone and/or data service, providing a secure and reliable way to back up and synchronize preferences.

Third, user preferences can be mapped to different car models and brands. This ensures that even if the driver selects a different car model or brand, the system will adjust to the closest possible value, creating a personalized driving experience.

In summary, the disclosed techniques provide a convenient and efficient way for drivers to save and restore their preferred car settings, creating a consistent and personalized driving experience across different cars.

Accordingly, at least the following EXAMPLES have been disclosed.

EXAMPLE 1: A method for configuring a property of a vehicle, the method comprising at a system (100) comprising a mobile device (120) assigned to a user (110) of the vehicle (140) and a head unit (150) of the vehicle (140):
- communicating (304, 322, 504) a signal (170) including a vehicle identifier from the head unit (150) to the mobile device (120),
- determining (324, 402, 524) at the mobile device (120) a setting as configured by the user (110) regarding a property (182) of another vehicle (180), the property (182) of the other vehicle (180) being of the same type as the property (142) of the vehicle (140),
- generating (326, 526) a setting for the property (142) of the vehicle (140) based on the vehicle identifier and the determined setting,
- receiving (306, 506) the generated setting at the vehicle (140), and
- configuring (308, 508) the property (142) of the vehicle (140) based on the received setting.

EXAMPLE 2: The method of EXAMPLE 1, wherein generating (326) the setting comprises adapting the determined setting based on configuration characteristics of the property (142) of the vehicle (140) and configuration characteristics of the property (182) of the other vehicle (180).

EXAMPLE 3: The method of EXAMPLE 1 or EXAMPLE 2, wherein communicating (304,322) the signal includes at least one of:
- providing (304) an optical code (170) on a display (154) of the vehicle (140), the optical code (170) including the vehicle identifier,
- scanning (322) an optical code (170) with a camera of the mobile device (120), the optical code (170) including the vehicle identifier,
- emitting (304), at the vehicle (140), a near-field radio signal including the vehicle identifier, and
- receiving (322), at the mobile device (120), a near-field radio signal including the vehicle identifier.

EXAMPLE 4: The method of any one of the preceding EXAMPLES, wherein determining (324) the setting as configured by the user (110) regarding the property (182) of the other vehicle (180) comprises retrieving the setting as configured by the user (110) regarding the property (182) of the other vehicle (180) from a data service (130), wherein a user identification and/or user authentication for retrieving the setting is provided by the mobile device (120) to the data service (130).

EXAMPLE 5: The method of EXAMPLE 4, wherein the data service (130) is provided by at least one of:
- the mobile device (120), and
- a service provider (132) in communication with at least one of the mobile device (120) and the vehicle (140).

EXAMPLE 6: The method of EXAMPLE 4 or EXAMPLE 5, further comprising:
- communicating (310, 330) a current setting of the property (142) of the vehicle (140) to the data service (130) and preferably
- storing the current setting of the property (142) of the vehicle (140) in the data service (130) in connection with the vehicle identifier and the user identification.

EXAMPLE 7: The method of any one of the preceding EXAMPLES, wherein the signal including the vehicle identifier is communicated upon at least one of:
the user (110) is entering the vehicle (140),
the user (110) registers at the vehicle (140), and
the user (110) is identified to be not registered at the vehicle (140).

EXAMPLE 8: A method comprising at a head unit of a vehicle:
- transmitting (304) a signal including a vehicle identifier to a mobile device (120), the mobile device (120) being assigned to a user (110) of the vehicle (140),
- receiving (306) a setting for a property (142) of the vehicle (140), the setting being generated based on the vehicle identifier and a setting configured by the user (110) regarding a property (182) of another vehicle (180), the property (182) of the other vehicle (180) being of the same type as the property (142) of the vehicle (140), and
- configuring (308) the property (142) based on the received setting.

EXAMPLE 9: The method of EXAMPLE 8, wherein transmitting (304) the signal includes at least one of:
- providing (304) an optical code (170) on a display (154) of the vehicle (140), the optical code (170) including the vehicle identifier, and
- emitting (304) a near-field radio signal including the vehicle identifier.

EXAMPLE 10: The method of EXAMPLE 8 or EXAMPLE 9, further comprising:
- transmitting (310) a current setting of the property (142) of the vehicle (140) to a data service (130).

EXAMPLE 11: The method of any one of EXAMPLES 8-10, wherein the signal including the vehicle identifier is transmitted upon at least one of:
the user (110) is entering the vehicle (140),
the user (110) registers at the vehicle (140), and
the user (110) is identified to be not registered at the vehicle (140).

EXAMPLE 12: A method comprising at a mobile device assigned to a user of a vehicle:
- receiving (322) a signal including a vehicle identifier from the vehicle (140),
- causing (402) a data service (130) to determine (324) a setting as configured by the user (110) regarding a property (182) of another vehicle (180), the property (182) of the other vehicle (180) being of the same type as the property (142) of the vehicle (140), to generate (326) a setting for the property (142) of the vehicle (140) based on the vehicle identifier and the determined setting, and to transmit (328) the generated setting to the vehicle (140) for the vehicle (140) to configure the property (142) of the vehicle (140) based on the transmitted setting.

EXAMPLE 13: The method of EXAMPLE 12, wherein receiving (322) the signal includes at least one of:
- scanning (322) an optical code (170) with a camera of the mobile device (120), the optical code (170) including the vehicle identifier, and
- receiving (322) a near-field radio signal including the vehicle identifier.

EXAMPLE 14: The method of EXAMPLE 12 or EXAMPLE 13, wherein the data service (130) is provided by at least one of:
- the mobile device (120), and
- a service provider (132) in communication with at least one of the mobile device (120) and the vehicle (140).

EXAMPLE 15: A method comprising at a data service:
- upon a request from a mobile device (120) assigned to a user (110) of a vehicle (140): determining (324) a setting as configured by the user (110) regarding a property (182) of another vehicle (180), the property (182) of the other vehicle (180) being of the same type as a property (142) of the vehicle (140),
- generating (326) a setting for the property (142) of the vehicle (140) based on a vehicle identifier provided by the mobile device (120) and the determined setting, and
- transmitting (328) the generated setting to the vehicle (140).

EXAMPLE 16: The method of EXAMPLE 15, wherein generating (326) the setting comprises adapting the determined setting based on configuration characteristics of the property (142) of the vehicle (140) and configuration characteristics of the property (182) of the other vehicle (180).

EXAMPLE 17: The method of EXAMPLE 15 or EXAMPLE 16, wherein a user identification and/or user authentication for determining (324) the setting as configured by the user (110) regarding the property (182) of the other vehicle (180) is provided by the mobile device (120).

EXAMPLE 18: The method of any one of EXAMPLES 15-17, wherein the data service (130) is provided by at least one of:
- the mobile device (120), and
- a service provider (132) in communication with at least one of the mobile device (120) and the vehicle (140).

EXAMPLE 19: The method of any one of EXAMPLES 15-18, further comprising:
- receiving (330) a current setting of the property (142) of the vehicle (140), and preferably
- storing (330) the current setting of the property (142) of the vehicle (140) in connection with the vehicle identifier and the user identification.

EXAMPLE 20: The method of any one of the preceding EXAMPLES, wherein the vehicle identifier includes at least one of:
a brand of the vehicle (140),
a model of the vehicle (140),
a vehicle identification number,
a communication address for setting up a wireless data communication to the vehicle (140).

EXAMPLE 21: The method of any one of the preceding EXAMPLES, wherein the property (142) comprises at least one of:
- a driver seat,
- a steering wheel,
- a radio,
- an entertainment system,
- a drive train,
- a heating, ventilation, and air conditioning system, and
- a rearview mirror.

EXAMPLE 22: A system comprising:
- a mobile device (120) assigned to a user (110) of a vehicle (140),
- a head unit (150) of the vehicle (140), and
- a property (142) to be configured of the vehicle (140),
wherein the system (100) is configured to
- communicate (304, 322, 504) a signal including a vehicle identifier from the head unit (150) to the mobile device (120),
- determine (402, 324, 524) at the mobile device (120) a setting as configured by the user (110) regarding a property (182) of another vehicle (180), the property (182) of the other vehicle (180) being of the same type as the property (142) of the vehicle (140),
- generate (326, 526) a setting for the property (142) of the vehicle (140) based on the vehicle identifier and the determined setting,
- receive (306, 506) the generated setting at the vehicle (140), and
- configure (308, 508) the property (142) of the vehicle (140) based on the received setting.

EXAMPLE 23: A head unit of a vehicle comprising control circuitry configured to:
- transmit (304) a signal including a vehicle identifier to a mobile device (120), the mobile device (120) being assigned to a user (110) of the vehicle (140),
- receive (306) a setting for a property (142) of the vehicle (140), the setting being generated based on the vehicle identifier and a setting configured by the user (110) regarding a property (182) of another vehicle (180), the property (182) of the other vehicle (180) being of the same type as the property (142) of the vehicle (140), and
- configure (308) the property (142) based on the received setting.

EXAMPLE 24: A mobile device assigned to a user of a vehicle, the mobile device comprising control circuitry configured to:
- receive (322) a signal including a vehicle identifier from the vehicle (140),
- cause (402, 324) a data service (130) to determine (324) a setting as configured by the user (110) regarding a property (182) of another vehicle (180), the property (182) of the other vehicle (180) being of the same type as a property (142) of the vehicle (140), to generate (326) a setting for the property (142) of the vehicle (140) based on the vehicle identifier and the determined setting, and to transmit (328) the generated setting to the vehicle (140) for the vehicle (140) to configure the property (142) of the vehicle (140) based on the transmitted setting.

EXAMPLE 25: A service provider providing a data service, the service provider comprising control circuitry configured to:
- upon a request from a mobile device (120) assigned to a user (110)of a vehicle (140): determine (324) a setting as configured by the user (110) regarding a property (182) of another vehicle (180), the property (182) of the other vehicle (180) being of the same type as a property (142) of the vehicle (140),
- generate (326) a setting for the property (142) of the vehicle (140) based on a vehicle identifier provided by the mobile device (120) and the determined setting, and
- transmit (328) the generated setting to the vehicle (140).

## Claims

1. A method for configuring a property of a vehicle, the method comprising at a system (100) comprising a mobile device (120) assigned to a user (110) of the vehicle (140) and a head unit (150) of the vehicle (140):
- communicating (304, 322, 504) a signal (170) including a vehicle identifier from the head unit (150) to the mobile device (120),
- determining (324, 402, 524) at the mobile device (120) a setting as configured by the user (110) regarding a property (182) of another vehicle (180), the property (182) of the other vehicle (180) being of the same type as the property (142) of the vehicle (140),
- generating (326, 526) a setting for the property (142) of the vehicle (140) based on the vehicle identifier and the determined setting,
- receiving (306, 506) the generated setting at the vehicle (140), and
- configuring (308, 508) the property (142) of the vehicle (140) based on the received setting.

2. The method of claim 1, wherein generating (326) the setting comprises adapting the determined setting based on configuration characteristics of the property (142) of the vehicle (140) and configuration characteristics of the property (182) of the other vehicle (180).

3. The method of claim 1 or claim 2, wherein communicating (304, 322, 504) the signal includes at least one of:
- providing (304) an optical code (170) on a display (154) of the vehicle (140), the optical code (170) including the vehicle identifier,
- scanning (322) an optical code (170) with a camera of the mobile device (120), the optical code (170) including the vehicle identifier,
- emitting (304), at the vehicle (140), a near-field radio signal including the vehicle identifier, and
- receiving (322), at the mobile device (120), a near-field radio signal including the vehicle identifier.

4. The method of any one of the preceding claims, wherein determining (324) the setting as configured by the user (110) regarding the property (182) of the other vehicle (180) comprises retrieving the setting as configured by the user (110) regarding the property (182) of the other vehicle (180) from a data service (130), wherein a user identification and/or user authentication for retrieving the setting is provided by the mobile device (120) to the data service (130).

5. The method of claim 4, wherein the data service (130) is provided by at least one of:
- the mobile device (120), and
- a service provider (132) in communication with at least one of the mobile device (120) and the vehicle (140).

6. The method of claim 4 or claim 5, further comprising:
- communicating (310, 330) a current setting of the property (142) of the vehicle (140) to the data service (130) and preferably
- storing the current setting of the property (142) of the vehicle (140) in the data service (130) in connection with the vehicle identifier and the user identification.

7. The method of any one of the preceding claims, wherein the signal including the vehicle identifier is communicated upon at least one of:
the user (110) is entering the vehicle (140),
the user (110) registers at the vehicle (140), and
the user (110) is identified to be not registered at the vehicle (140).

8. A method comprising at a head unit of a vehicle:
- transmitting (304) a signal including a vehicle identifier to a mobile device (120), the mobile device (120) being assigned to a user (110) of the vehicle (140),
- receiving (306) a setting for a property (142) of the vehicle (140), the setting being generated based on the vehicle identifier and a setting configured by the user (110) regarding a property (182) of another vehicle (180), the property (182) of the other vehicle (180) being of the same type as the property (142) of the vehicle (140), and
- configuring (308) the property (142) based on the received setting.

9. The method of claim 8, wherein transmitting (304) the signal includes at least one of:
- providing (304) an optical code (170) on a display (154) of the vehicle (140), the optical code (170) including the vehicle identifier, and
- emitting (304) a near-field radio signal including the vehicle identifier.

10. A method comprising at a mobile device assigned to a user of a vehicle:
- receiving (322) a signal including a vehicle identifier from the vehicle (140),
- causing (402) a data service (130) to determine (324) a setting as configured by the user (110) regarding a property (182) of another vehicle (180), the property (182) of the other vehicle (180) being of the same type as the property (142) of the vehicle (140), to generate (326) a setting for the property (142) of the vehicle (140) based on the vehicle identifier and the determined setting, and to transmit (328) the generated setting to the vehicle (140) for the vehicle (140) to configure the property (142) of the vehicle (140) based on the transmitted setting.

11. A method comprising at a data service:
- upon a request from a mobile device (120) assigned to a user (110) of a vehicle (140): determining (324) a setting as configured by the user (110) regarding a property (182) of another vehicle (180), the property (182) of the other vehicle (180) being of the same type as a property (142) of the vehicle (140),
- generating (326) a setting for the property (142) of the vehicle (140) based on a vehicle identifier provided by the mobile device (120) and the determined setting, and
- transmitting (328) the generated setting to the vehicle (140).

12. A system comprising:
- a mobile device (120) assigned to a user (110) of a vehicle (140),
- a head unit (150) of the vehicle (140), and
- a property (142) to be configured of the vehicle (140),
wherein the system (100) is configured to
- communicate (304, 322, 504) a signal including a vehicle identifier from the head unit (150) to the mobile device (120),
- determine (402, 324, 524) at the mobile device (120) a setting as configured by the user (110) regarding a property (182) of another vehicle (180), the property (182) of the other vehicle (180) being of the same type as the property (142) of the vehicle (140),
- generate (326, 526) a setting for the property (142) of the vehicle (140) based on the vehicle identifier and the determined setting,
- receive (306, 506) the generated setting at the vehicle (140), and
- configure (308, 508) the property (142) of the vehicle (140) based on the received setting.

13. A head unit of a vehicle comprising control circuitry configured to:
- transmit (304) a signal including a vehicle identifier to a mobile device (120), the mobile device (120) being assigned to a user (110) of the vehicle (140),
- receive (306) a setting for a property (142) of the vehicle (140), the setting being generated based on the vehicle identifier and a setting configured by the user (110) regarding a property (182) of another vehicle (180), the property (182) of the other vehicle (180) being of the same type as the property (142) of the vehicle (140), and
- configure (308) the property (142) based on the received setting.

14. A mobile device assigned to a user of a vehicle, the mobile device comprising control circuitry configured to:
- receive (322) a signal including a vehicle identifier from the vehicle (140),
- cause (402, 324) a data service (130) to determine (324) a setting as configured by the user (110) regarding a property (182) of another vehicle (180), the property (182) of the other vehicle (180) being of the same type as a property (142) of the vehicle (140), to generate (326) a setting for the property (142) of the vehicle (140) based on the vehicle identifier and the determined setting, and to transmit (328) the generated setting to the vehicle (140) for the vehicle (140) to configure the property (142) of the vehicle (140) based on the transmitted setting.

15. A service provider providing a data service, the service provider comprising control circuitry configured to:
- upon a request from a mobile device (120) assigned to a user (110)of a vehicle (140): determine (324) a setting as configured by the user (110) regarding a property (182) of another vehicle (180), the property (182) of the other vehicle (180) being of the same type as a property (142) of the vehicle (140),
- generate (326) a setting for the property (142) of the vehicle (140) based on a vehicle identifier provided by the mobile device (120) and the determined setting, and
- transmit (328) the generated setting to the vehicle (140).
